# EUROPEAN PATENT SPECIFICATION

(11) **EP 4 331 746 B1**
(45) Date of publication and mention of the grant of the patent: **11.06.2025**
(21) Application number: 22883012.1
(22) Date of filing: 15.11.2022
(51) Int. Cl.: B22F 3/11, B22F 5/10, B22F 10/28, B22F 10/366, B22F 10/64, B33Y 10/00, B33Y 40/20, B33Y 50/02, B33Y 80/00, C21D 6/00, C22C 1/04, C22C 33/02, C22F 1/10, G06F 30/17, G06F 30/23, F16F 7/00, G06F 119/08, G06F 119/14

(54) **VARIABLE DENSITY LATTICE METAL HAVING VIBRATION DAMPING CHARACTERISTICS, ADDITIVE MANUFACTURING METHOD THEREFOR AND USE THEREOF**
GITTERMETALL MIT VARIABLER DICHTE UND SCHWINGUNGSDÄMPFENDEN EIGENSCHAFTEN, VERFAHREN ZUR GENERATIVEN HERSTELLUNG UND VERWENDUNG DESSELBEN
MÉTAL EN TREILLIS À DENSITÉ VARIABLE AYANT DES CARACTÉRISTIQUES D'AMORTISSEMENT DES VIBRATIONS, SON PROCÉDÉ DE FABRICATION ADDITIVE ET SON UTILISATION

(30) Priority: 19.10.2022 CN 202211277283
(43) Date of publication of application: 06.03.2024
(73) Proprietor: Shenyang Research Institute of Foundry Co., Ltd. CAM, Liaoning 110000 (CN)
(72) Inventor: WEI, Yanpeng, Shenyang, Liaoning 110000 (CN); YU, Bo, Shenyang, Liaoning 110000 (CN); GAO, Peng, Shenyang, Liaoning 110000 (CN); MA, Yingchun, Shenyang, Liaoning 110000 (CN); CHENG, Jingchang, Shenyang, Liaoning 110000 (CN); SHI, Jian, Shenyang, Liaoning 110000 (CN); MIAO, Zhiquan, Shenyang, Liaoning 110000 (CN); GUAN, Shuwen, Shenyang, Liaoning 110000 (CN); LIU, Shichang, Shenyang, Liaoning 110000 (CN)
(74) Representative: De Clercq & Partners
(86) International application number: PCT/CN2022/131912
(87) International publication number: WO 2023/066408

(56) References cited:
- CN-A- 104 252 564
- CN-A- 105 543 747
- CN-A- 108 197 399
- CN-A- 108 875 138
- CN-A- 111 451 505
- CN-A- 111 570 793
- CN-A- 112 008 081
- CN-A- 112 355 277
- CN-A- 112 948 906
- CN-A- 113 196 273
- US-A1- 2006 147 332
- US-A1- 2014 363 481
- US-A1- 2018 085 830
- US-A1- 2019 137 972
- US-A1- 2021 045 880
- US-A1- 2022 142 783
- US-B2- 11 155 073
- YANPENG WEI ET AL: "Damping behaviors of steel-based Kelvin lattice structures fabricated by indirect additive manufacture combining investment casting", SMART MATERIALS AND STRUCTURES, IOP PUBLISHING LTD., BRISTOL, GB, vol. 29, no. 5, 23 March 2020 (2020-03-23), pages 55001, XP020353048, ISSN: 0964-1726, [retrieved on 20200323], DOI: 10.1088/1361-665X/AB78B8
- FAN ZEFENG ET AL: "Full compression response of FG-based scaffolds with varying porosity via an effective numerical scheme", INTERNATIONAL JOURNAL OF MECHANICAL SCIENCES, PERGAMON PRESS, OXFORD, GB, vol. 223, 20 April 2022 (2022-04-20), XP087052385, ISSN: 0020-7403, [retrieved on 20220420], DOI: 10.1016/J.IJMECSCI.2022.107294
- RUIZ DE GALARRETA SERGIO ET AL: "Laser powder bed fusion of porous graded structures: A comparison between computational and experimental analysis", JOURNAL OF THE MECHANICAL BEHAVIOR OF BIOMEDICAL MATERIALS, ELSEVIER, AMSTERDAM, NL, vol. 123, 17 August 2021 (2021-08-17), XP086775699, ISSN: 1751-6161, [retrieved on 20210817], DOI: 10.1016/J.JMBBM.2021.104784

## Description

### BACKGROUND OF THE PRESENT INVENTION

### FIELD OF INVENTION

The present invention relates to the technical field of additive manufacturing of lattice metals, and more particularly, to a variable density lattice metal having vibration damping characteristics, an additive manufacturing method therefor, and use thereof.

### DESCRIPTION OF RELATED ARTS

In recent years, the development of national defense and civil industry has a very urgent demand for vibration and noise reduction technology. For example, the vibration of the ship structure will not only cause fatigue damage to the hull structure, but also reduce the comfort and safety of passengers. For military submarines, excessive noise will seriously affect their stealth effect, thereby increasing their risk of exposure and reducing their combat effectiveness. During the long-term use of the aircraft, vibrations will cause problems such as cracks in the rudder and the tail cover, which will seriously affect the reliability of the flight performance and the service life of the aircraft. During a high-speed flight, the aerospace vehicle is easy to damage the empennage due to the resonance phenomenon, causing its flight direction to change, causing serious consequences of damage to the aerospace vehicle. Nowadays, vibration and noise reduction has become a key technical bottleneck restricting the high performance service of high-end equipment in the fields of ships, aerospace and other fields.

The functional structure with vibration reduction is to transform the mechanical energy of vibration into other forms of energy under the action of external excitation through the structural design and the damping performance of the material itself, to achieve the purpose of reducing vibration and noise. Common damping materials include polymer damping materials, high-damping metal materials and porous metals. Polymer damping materials have been used in the fields of aerospace and ship vibration and noise reduction to some extent, but the natural disadvantages of easy aging and low stiffness make it difficult to guarantee the long-term effective performance, which has become a huge obstacle and technical bottleneck that restricts their further application and development. High-damping metal materials and porous metals based on metal materials have obvious advantages in mechanical properties, anti-aging properties, and corrosion resistance, showing broad application prospects and scientific value.

Porous metals are mainly divided into metal foam and lattice metals. The lattice metal has the advantages of the free design of pore structure, free adjustment of porosity, and the use of existing high-damping metal materials as the base material. There is a large region for innovation of the lattice metal, but the current design of some lattice metals mainly focuses on the mechanical properties, and has not yet involved the design of variable density lattice metal pore structure based on the improvement of vibration damping performance. On the other hand, the forming process of using selective laser melting of the additively manufacturing lattice metal has the outstanding characteristics of small cross-section discontinuous scanning, which is easy to cause defects such as cracks on the surface of pore struts of the lattice metal, and the surface quality of lattice metal is poor, so that it seriously affects the actual service performance of the lattice metals.

Therefore, based on the improvement of vibration damping performance, the structure design of variable density lattice metal is driven, the variable density lattice metal is designed by a modal strain energy method, and the variable density lattice metal is prepared by a selective laser melting additive manufacturing process, and no relevant reports have been found about that.

US 2006/147332 A1 discloses a method of producing a three-dimensional porous tissue in-growth structure. The method includes the steps of depositing a first layer of metal powder and scanning the first layer of metal powder with a laser beam to form a portion of a plurality of predetermined unit cells. Depositing at least one additional layer of metal powder onto a previous layer and repeating the step of scanning a laser beam for at least one of the additional layers in order to continuing forming the predetermined unit cells. The method further includes continuing the depositing and scanning steps to form a medical implant.

US 2022/142783 A1 discloses an implant for in-vivo implantation which comprises an assembly of two or more constructive elements which are movable relative to each other. Each constructive element is partly or completely porous and comprises a porous part with a matrix of open cells. A first matrix of the first element comprises a first overlapping part with a form-closed connection to a second overlapping part of a second matrix of the second of the constructive elements through which the first overlapping part extends. The overlapping parts are movable relative to each other to change a combined shape of the overlapping parts.

US 2021/045880 A1 discloses a method for manufacturing an implant includes pre-selecting a designed porous microstructure having a lattice composed of cells, including selecting one or more predetermined cell topologies, selecting a predetermined porosity, cell strut thickness and packing factor of the lattice, and selecting an arrangement of the cells within the lattice to have a periodic and/or aperiodic arrangement. Additive manufacturing is used to form the designed porous lattice microstructure in at least a region of at least an external surface of the implant.

US 2014/363481 A1 discloses a methodology integrating multiscale analysis and design optimization to design a novel bone replacement implant made of a functionally graded cellular material that meets fatigue requirements imposed by cyclic loadings. The pore microarchitecture, described by interconnectivity, porosity, pore size as well as pore topology, is optimally designed for tissue regeneration and mechanical strength. The method can contribute to the development of a new generation of bone replacement implants with a graded cellular microstructure.

"Damping behaviours of steel-based Kelvin lattice structures fabricated by indirect additive manufacture combining investment casting" (YANPENG WEI ET AL, Smart Materials and Structures, IOP Publishing, 23 March 2020) discloses damping properties of lattice metal with Kelvin structure were studied by simulation and experiment, and it was prepared by indirect additive manufacturing combined with precision casting.

US 2019/137972 A1 discloses exemplified methods and systems facilitate manufacturing of a new class of mechanical, loading-bearing components having optimized stress/strain three-dimensional meta-structure structures as finite-element-based 3D volumetric mesh structures. The resulting three-dimensional meta-structure structures provide high strength, ultra-light connectivity, with programmable interlinkage properties (e.g., density/porosity of linkages).

"Full compression response of FG-based scaffolds with varying porosity via an effective numerical scheme" (FAN ZEFENG ET AL, International Journal of Mechanical Sciences, Pergamon Press, Oxford, GB, vol. 223, 20 April 2022) discloses a full compression response of fiber-based scaffolds with different porosity based on effective numerical format. In this paper, the gradient scaffolds (bone-gyro and sheet-gyro) of gyro-based three-period minimal surface (TPMS) with different porosity in axial and radial directions were prepared by selective laser melting technology, using Ti-6Al-4V powder as raw material.

### SUMMARY OF THE PRESENT INVENTION

It is an object of the present invention to provide an advantageous variable density lattice metal having vibration damping characteristics, an additive manufacturing method therefor, and a use thereof. The object is achieved by the features of the respective independent claims. Further embodiments are defined by the respective dependent claims.

The advantage of the present invention and beneficial effects are as follows.
1. In view of the urgent need for vibration damping metals for vibration transmission path components of a high-end equipment such as ships, aerospace equipment, and rail transportation equipment, the present invention is based on the pore structure design of the improving driving lattice metal of the vibration damping performance, and adopts the modal strain energy method to design the variable density lattice metal, wherein the variable density lattice metal has vibration damping characteristics.
2. Because there are transitions and connections between different pore strut diameters in the variable density lattice metal, the gradient change of different pore strut diameters has a certain step size, and steps and sharp corners must appear at the interface of the connection. The invention adopts the smoothing treatment parameters suitable for the variable density lattice metal to ensure the high-precision forming of the variable density lattice metal.
3. Due to the outstanding characteristics of small-section discontinuous scanning of the variable density lattice metal in the forming process of the selective laser melting additive manufacturing process, cracks and other defects are prone to appear on the surface of pore struts, and the surface roughness is relatively large. Further enlargement of the defects after layer-by-layer amplification will greatly affect the actual service performance of the variable density lattice metal. The present invention adopts the circular scanning strategy and related process parameters, which can avoid the above problems and ensure the high-quality forming of the variable density lattice metal.
4. The variable density lattice metal of the present invention fully utilizes the advantages of free design of lattice metal pore structure, and simultaneously adopts three kinds of pore structures, i.e. tetradecahedron structure, combined structure of dodecahedron and tetradecahedron, or truncated octahedron structure, as the cell structure of lattice metal, combined with the selective laser melting additive manufacturing process suitable for the variable density lattice metal, the variable density lattice metal with both vibration damping characteristics and mechanical properties is prepared, and the function of lattice metal structural integration design and fabrication is realized.
5. The variable density lattice metal of the present invention can be applied to vibration transmission path components, vibration damping components, and vibration isolation components of high-end equipment such as aerospace equipment, ships, and rail transportation equipment, which broadens the application range of the lattice metal.

### BRIEF DESCRIPTION OF THE DRAWINGS

In order to illustrate the technical solutions of the embodiments of the present invention more clearly, the accompanying drawings used in the embodiments will be briefly introduced below. It should be understood that the following drawings only show some embodiments of the present invention.
FIG. 1 is a schematic diagram of a design model of lattice metal cells having vibration damping characteristics in Embodiment 1.
FIG. 2 is a schematic diagram of a design model of lattice metal cells having vibration damping characteristics in Embodiment 2.
FIG. 3 is a schematic diagram of a design model of lattice metal cells having vibration damping characteristics in Embodiment 3.
FIG. 4 is a point cloud diagram of the modal strain energy of a variable density lattice metal having vibration damping characteristics.
FIG. 5 is a schematic diagram of the variable density lattice metal having vibration damping characteristics in Embodiment 1.
FIG. 6 is a schematic diagram of the variable density lattice metal having vibration damping characteristics in Embodiment 2.
FIG. 7 is a schematic diagram of the variable density lattice metal having vibration damping characteristics in Embodiment 3.
FIG. 8 is a free attenuation diagram of the variable density lattice metal having vibration damping characteristics which is prepared in Embodiment 1.
FIG. 9 is a compressive stress-strain curve of the variable density lattice metal having vibration damping characteristics which is prepared in Embodiment 1.

### DETAILED DESCRIPTION OF THE PREFERRED EMBODIMENT

The preparation method of the present invention will be described in detail below in conjunction with the accompanying drawings, and the examples given are only used to explain the present invention and are not intended to limit the scope of the present invention.

### Embodiment 1

This embodiment is to design and prepare a variable density lattice metal with a porosity of 40% and having vibration damping properties.

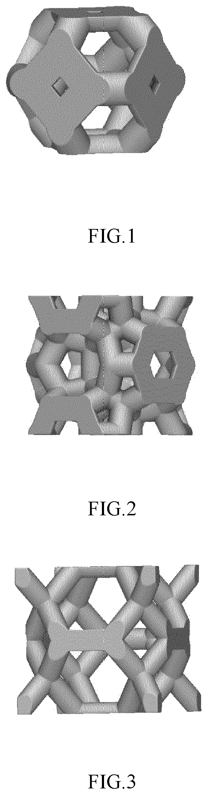

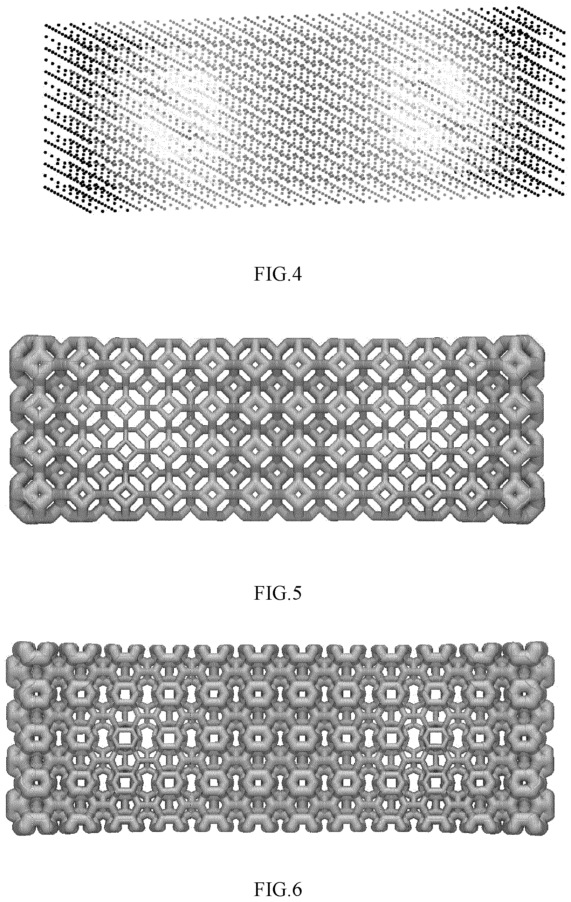

The tetradecahedron structure is used as the cell structure of the lattice metal, as shown in FIG. 1. The modal shape of the structure is calculated by finite element software, and the settlement results are post-processed to extract the modal strain. The modal strain energy point cloud diagram is constructed by using the MATLAB software, as shown in FIG. 4. The continuous gradient change of lattice metal pore strut diameter is driven by a strain energy field function. The diameter of lattice metal pore strut is the largest in the area with large modal strain energy, which is set to be 2 mm, and the diameter of lattice metal pore strut is the smallest in the area with small modal strain energy, which is set to be 0.5mm, the diameter of the metal pore strut of the variable density lattice changes continuously in the range of 0.5-2mm, the step size of the gradient change is 0.08mm, and the cell size is 5mm. The above mentioned modal strain energy method is used to drive the design of variable density lattice metal cells, and expand in space to from the variable density lattice metal.

The variable density lattice metal having vibration damping characteristics is prepared by selective laser melting additive manufacturing process, including the following steps:
step 1:using a three-dimensional design software to design a process adaptability of a pore structure of the lattice metal according to the characteristics of the selective laser melting additive manufacturing process, performing smoothing treatment on the change position of the pore strut diameter and the connection position of the pore strut of the variable density lattice metal, wherein the smoothing treatment parameters are: smoothing radius is 0.1 mm, smoothing times is 2 times, and finally establishing a three-dimensional model of the variable density lattice metal;
step 2: slicing the three-dimensional model of the variable density lattice metal established in step 1 by using a slicing software, wherein the scanning strategy is a circular scanning strategy, centering on the diameter of the plane of the pore strut of the slice of the variable density lattice metal, and gradually extending the scanning outward in a concentric circle, wherein the scanning interval is set to be 30 µm, wherein regarding the process parameters of the selective laser melting additive manufacturing process, the scanning power is 60W, the scanning speed is 100mm/s, and the layer thickness is 20µm, wherein under the protection of inert gas, processing the base material into the variable density lattice metal having vibration damping characteristics by adopting the above-mentioned scanning strategy and process parameters, wherein the matrix material of the variable density lattice metal is GH4169 superalloy powder, and the particle size of the powder is 15-53 µm; and
step 3: performing heat treatment on the variable density lattice metal obtained in step 2, wherein the process is as follows: heat preservation at 960°C for 1 hour, water cooling; then heat preservation at 720°C for 8 hours; finally, furnace cooling to 620°C at a cooling rate of 50°C/h, the heat preservation time is 8 hours, and then air cooling; and obtaining the lattice metal having vibration damping characteristics is shown in FIG. 5.

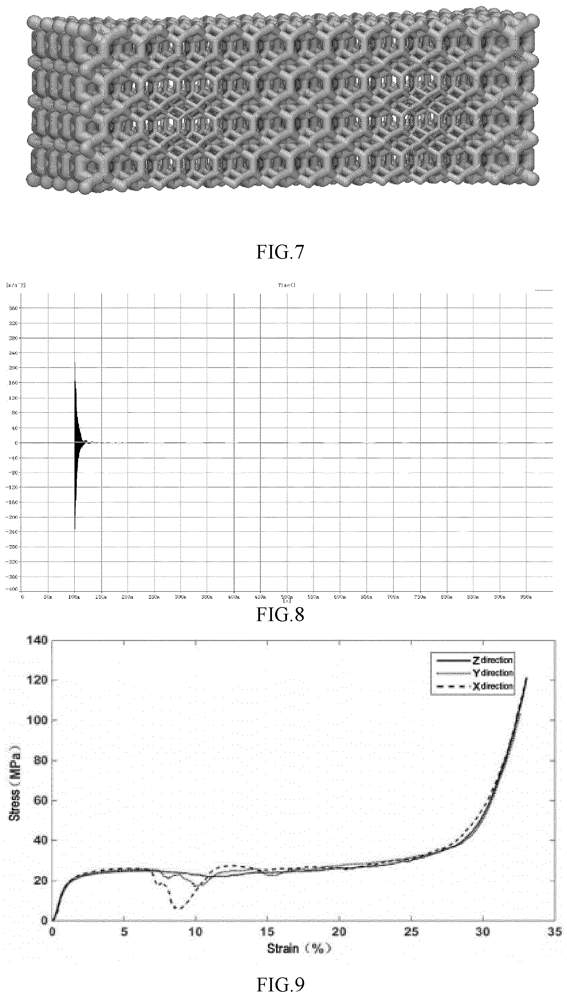

The free attenuation curve of the variable density lattice metal prepared in this embodiment under vibration excitation conditions is shown in FIG. 8. It can be seen that the vibration response signal decays rapidly in the variable density lattice metal, which has good vibration damping characteristics. At the same time, the variable density lattice metal in this embodiment has both a smooth compressive stress-strain curve and an obvious plastic yield platform. The compressive stress-strain curve is shown in FIG. 9, and the yield platform stress is about 23 MPa.

### Comparative example 1

This experiment is a comparative example of Example 1; in the process of designing and preparing the variable density lattice metal with a porosity of 40% with vibration damping characteristics, the change position of the pore strut diameter and the connection position of the pore strut of the variable density lattice metal is not smoothed, and the scanning strategy adopts the linear scanning method. Its structural design and other preparation process parameters are completely consistent with Embodiment 1, and the specific preparation steps are as follows:
step 1: using the three-dimensional design software to design the process adaptability of the pore structure of the lattice metal according to the characteristics of the selective laser melting additive manufacturing process, no smoothing on the change position of the pore strut diameter and the connection position of the pore strut of the variable density lattice metal, and building a three-dimensional model of the variable density lattice metal;
step 2: using the slicing software to slice the three-dimensional model of the variable density lattice metal established in step 1, wherein the scanning strategy is a linear scanning strategy, and the scanning interval is set to be 30 µm, wherein regarding the process parameters of the selective laser melting additive manufacturing process, the scanning power is 60 W, the scanning speed is 100 mm/s, and the layer thickness is 20 µm, wherein using the above mentioned scanning strategy and process parameters, the base material is processed into a variable density lattice metal under an inert gas protection environment, wherein the matrix material of the variable density lattice metal is GH4169 superalloy powder, and the particle size of the powder is 15-53 µm; and
step 3: performing heat treatment on the variable density lattice metal obtained in step 2, wherein the process is as follows: heat preservation at 960°C for 1 hour, water cooling; then heat preservation at 720°C for 8 hours, finally, furnace cooling to 620 °C at a cooling rate of 50°C/h, heat preservation time is 8 hours, air cooling.

The surface roughness of the variable-density lattice metal prepared in this comparative example is relatively large, and there are many microcracks on the surface of the pore strut; the compressive stress-strain curve is jagged, and there is no obvious plastic yield platform.

### Embodiment 2

This embodiment is to design and prepare a variable density lattice metal with a porosity of 60% and having vibration damping characteristics.

The combined structure of dodecahedron and tetradecahedron is used as the cell structure of lattice metal, as shown in FIG. 2. The modal shape of the structure is calculated by the finite element software, and the calculation results are post-processed to extract the modal strain. The modal strain energy point cloud diagram is constructed by using MATLAB software, and the continuous gradient change of the lattice metal pore-strut diameter is driven by the strain energy field function. The pore strut diameter of the lattice metal in the area with large modal strain energy is the largest, which is set to be 3mm; the pore strut diameter of the lattice metal in the area with small modal strain energy is the smallest, which is set to be 1mm, and the pore strut diameter of variable density lattice metal is continuously changed in the range of 1-3mm, the step size of the gradient change is 0.1mm, and the cell size is 7mm. The above mentioned modal strain energy method is used to drive the design of variable density lattice metal, and expand in space to form the variable density lattice metal.

The variable density lattice metal having vibration damping characteristics is prepared by the selective laser melting additive manufacturing process, including the following steps:
step 1: according to the characteristics of the selective laser melting additive manufacturing process, using the three-dimensional design software to design the process adaptability of the pore structure of the lattice metal having vibration damping characteristics, performing smoothing treatment on the change position of the pore strut diameter and the connection position of the pore strut of the variable density lattice metal, wherein the smoothing treatment parameters are: smoothing radius is 0.3mm, smoothing times is 3 times, and finally establishing a three-dimensional model of variable density lattice metal;
step 2: using the slicing software to slice the three-dimensional model of the variable density lattice metal having vibration damping characteristics established in step 1,wherein the scanning strategy is a circular scanning strategy, which is centered on the diameter of the pore strut plane of the slice of the variable density lattice metal, and gradually expands the scanning outward in a concentric circle, with a scanning interval of 60 µm, wherein regarding the process parameters of the selective laser melting additive manufacturing process, the scanning power is 150W, the scanning speed is 800mm/s, the layer thickness is 30µm, wherein using the above mentioned scanning strategy and process parameters, the base material is processed into a variable density lattice metal having vibration damping characteristics under an inert gas protection environment, wherein the matrix material of the variable density lattice metal is 304 stainless steel powder, and the particle size of the powder is 15-53 µm; and
step 3: performing solid solution treatment on the variable density lattice metal obtained in Step 2, the treatment temperature is 1100° C, and the treatment time is 3 hours, and obtaining the lattice metal having vibration damping characteristics is shown in FIG. 6. The variable density lattice metal in this embodiment has vibration damping characteristics, and simultaneously has a smooth compressive stress-strain curve and an obvious plastic yield platform, and the yield platform stress is 10 MPa.

### Embodiment 3

This embodiment is to design and prepare a variable density lattice metal with a porosity of 90% and having vibration damping characteristics.

The truncated octahedral structure is used as the cell structure of the lattice metal, as shown in FIG. 3. The modal shape of the structure is calculated by the finite element software, and the calculation results are post-processed to extract the modal strain. The modal strain energy point cloud diagram is constructed by using MATLAB software, and the continuous gradient change of the pore strut diameter of the lattice metal pore is driven by the strain energy field function. The pore strut diameter of the lattice metal in the area with large modal strain energy is the largest, which is set to be 5mm, and the pore strut diameter of the lattice metal in the area with small modal strain energy is the smallest, which is set to be 1mm, and the pore strut diameter of the variable density lattice metal is continuously changed in the range of 1 to 5mm, the step size of the gradient change is 0.2mm, and the cell size is 10mm. The above-mentioned modal strain energy method is used to drive the design of the variable density lattice metal, and expand in space to form the variable density lattice metal.

The variable density lattice metal having vibration damping characteristics is prepared by the selective laser melting additive manufacturing process, including the following steps:
step 1: according to the characteristics of the selective laser melting additive manufacturing process, using the three-dimensional design software to design the process adaptability of the pore structure of the lattice metal having vibration damping characteristics, performing smoothing treatment on the change position of the pore strut diameter and the connection position of the pore strut of the variable density lattice metal, wherein the smoothing treatment parameters are: smoothing radius is 0.5mm, smoothing times is 3 times, and finally establishing a three-dimensional model of variable density lattice metal;
step 2: using the slicing software to slice the three-dimensional model of the variable density lattice metal having vibration damping characteristics established in step 1, wherein the scanning strategy is a circular scanning strategy, which is centered on the diameter of the plane of the pore strut of slice of the variable density lattice metal and gradually expands the scanning outward in the form of concentric circles, with a scanning interval of 110 µm, wherein regarding the process parameters of the selective laser melting additive manufacturing process, the scanning power is 220W, the scanning speed is 2000mm/s, and the layer thickness is 50µm, wherein under the protection of inert gas, processing the base material into a variable density lattice metal having vibration damping characteristics by adopting the above mentioned scanning strategy and process parameters, wherein the matrix material of the variable density lattice metal is 304 stainless steel powder, and the particle size of the powder is 15-53 µm; and
step 3: performing solid solution treatment on the variable density lattice metal obtained in Step 2, the treatment temperature is 800° C, and the treatment time is 15 hours, and obtaining the lattice metal with damping properties is shown in FIG.7.

The variable density lattice metal of this embodiment has vibration damping characteristics, and simultaneously has a smooth compressive stress-strain curve and an obvious plastic yield platform, and the yield platform stress is 5MPa.

The above-mentioned embodiments are only to illustrate the technical concept and characteristics of the present invention, and the purpose is to enable those skilled in the art to understand the content of the present invention and implement it accordingly, and not to limit the protection scope of the present invention.

## Claims

1. A variable density lattice metal having vibration damping characteristics, **characterized in that** each of the cells of the lattice metal has a tetradecahedron structure, a combination structure of a dodecahedron and a tetradecahedron, or a truncated octahedron structure, and the cells are expanded to form the lattice metal;
wherein the lattice metal is based on a modal strain energy method to drive the design of pore strut diameters, and the overall structural density shows a non-homogeneous continuous gradient change, wherein the modal strain energy method is used to calculate a modal shape of the structure through a finite element software, a modal strain is extracted and a modal strain energy point cloud diagram is constructed, a continuous gradient change of the pore strut diameters of the lattice metal is driven through a strain energy field function, and the value of the pore strut diameters of the lattice metal in an area with large modal strain energy is larger than in an area of small strain energy, wherein the gradient change of the pore strut diameters of the variable-density lattice metal is not in a single direction;
wherein the variable density lattice metal is prepared by a selective laser melting additive manufacturing process;
wherein the porosity of the lattice metal is 40% to 90%, the pore strut diameters change continuously in the range of 0.5mm to 5mm, the step size of the continuous gradient change of the pore strut diameters of the lattice metal is 0.08-0.2 mm, and the cell size of the lattice metal is 5 to 10mm.

2. The variable density lattice metal having vibration damping characteristics according to claim 1, **characterized in that** the compressive mechanical property of the variable density lattice metal has a smooth stress-strain curve and an obvious plastic yield platform, and the stress range of the plastic yield platform is 5-23 MPa.

3. A manufacturing method of the variable density lattice metal having vibration damping characteristics according to claim 1, **characterized in that** the manufacturing method comprises the following steps:
step 1: using a three-dimensional design software to carry out a process adaptability design of the pore structure of the variable density lattice metal, smoothing a change position of the pore strut diameter and a connection position of the pore strut of the variable density lattice metal, and establishing a 3D model of the variable density lattice metal, wherein the parameters of the smoothing treatment are: the smoothing radius is 0.1-0.5 mm, and the smoothing times are 2-3 times;
step 2: using a slicing software to slice the 3D model of the variable density lattice metal established in step 1, based on the characteristics of small-section discontinuous scanning in the lattice metal forming process, setting the scanning strategy and process parameters, and processing a matrix material into a variable density lattice metal under the protection of inert gas, wherein the scanning strategy is a circular scanning strategy, centering on a diameter of the plane of the pore strut of the slice of the lattice metal, and gradually extending the scanning outward in the form of concentric circles, wherein the scanning interval is 30-110 µm, and the scanning power is 60-220W, the scanning speed is 100-2000mm/s, and the layer thickness is 20-50µm; and
step 3: heat-treating the variable density lattice metal obtained in step 2.

4. The manufacturing method according to claim 3, **characterized in that** the matrix material is GH4169 superalloy powder or 304 stainless steel powder, and the particle size of the powder is 15-53 µm.

5. The manufacturing method according to claim 3, **characterized in that** in step 3, when the matrix material is GH4169 superalloy powder, the heat treatment process is as follows: first, heat preservation at 960°C for 1 hour, and water cooling, then heat preservation at 720°C for 8 hours, and finally furnace cooling to 620°C at a cooling rate of 50°C/h, heat preservation for 8 hours, and air cooling; when the matrix material is 304 stainless steel, the heat treatment process is solution treatment, the treatment temperature is 800-1100° C, and the treatment time is 3-15 hours.

6. Use of the variable density lattice metal having vibration damping characteristics prepared by the manufacturing method according to claim 3 in a vibration transmission path component, a vibration damping component or a vibration isolation component of a ship, an aerospace equipment, and a rail transportation equipment.

## Patentansprüche

1. Gittermetall mit variabler Dichte, das schwingungsdämpfende Eigenschaften aufweist, **dadurch gekennzeichnet, dass** jede der Zellen des Gittermetalls eine Tetraederstruktur, eine Kombinationsstruktur aus einem Dodekaeder und einem Tetraeder oder eine Oktaederstumpfstruktur aufweist, und wobei die Zellen erweitert werden, um das Gittermetall zu bilden;
wobei das Gittermetall basiert ist auf einem modalen Verformungsenergieverfahren, um die Auslegung von Porenverstrebungsdurchmessern zu steuern, und wobei die gesamte Strukturdichte eine nicht-homogene kontinuierliche Gradientenveränderung zeigt, wobei das modale Verformungsenergieverfahren verwendet wird, um eine modale Gestalt der Struktur durch eine Finite-Elemente-Software zu berechnen, wobei eine modale Verformung extrahiert wird und ein Punktwolkendiagramm einer modalen Verformungsenergie aufgebaut wird, wobei eine kontinuierliche Gradientenveränderung der Porenverstrebungsdurchmesser des Gittermetalls durch eine Verformungsenergiefeldfunktion gesteuert wird, und wobei der Wert der Porenverstrebungsdurchmesser des Gittermetalls in einem Bereich mit einer großen modalen Verformungsenergie größer ist als in einem Bereich einer geringen Verformungsenergie, wobei die Gradientenveränderung der Porenverstrebungsdurchmesser des Gittermetalls mit variabler Dichte nicht in einer einzigen Richtung erfolgt;
wobei das Gittermetall mit variabler Dichte durch einen generativen Herstellungsprozess mit einem selektiven Laserschmelzen vorbereitet wird;
wobei die Porosität des Gittermetalls von 40% bis 90% reicht, wobei sich die Porenverstrebungsdurchmesser kontinuierlich in einem Bereich von 0,5 mm bis 5 mm verändern, wobei die Schrittgröße der kontinuierlichen Gradientenveränderung der Porenverstrebungsdurchmesser des Gittermetalls zwischen 0,08 und 0,2 mm liegt und wobei die Zellengröße des Gittermetalls von 5 bis 10 mm reicht.

2. Gittermetall mit variabler Dichte, das schwingungsdämpfende Eigenschaften aufweist, nach Anspruch 1, **dadurch gekennzeichnet, dass** die zusammenpressende mechanische Eigenschaft des Gittermetalls mit variabler Dichte eine glatte Spannungs-Dehnungs-Kurve und eine offensichtliche plastische Streckplattform aufweist, und wobei der Spannungsbereich der plastischen Streckplattform zwischen 5 und 23 MPa liegt.

3. Herstellungsverfahren für das Gittermetall mit variabler Dichte, das schwingungsdämpfende Eigenschaften aufweist, nach Anspruch 1, **dadurch gekennzeichnet, dass** das Herstellungsverfahren die folgenden Schritte: umfasst:
Schritt 1: Verwenden einer dreidimensionalen Gestaltungssoftware, um eine Gestaltung einer Prozessanpassungsfähigkeit der Porenstruktur des Gittermetalls mit variabler Dichte auszuführen, Glätten einer Veränderungsposition des Porenverstrebungsdurchmessers und einer Verbindungsposition der Porenverstrebung des Gittermetalls mit variabler Dichte, und Einrichten eines 3D-Modells des Gittermetalls mit variabler Dichte, wobei die Parameter der Glättungsbehandlung sind: der Glättungsradius beträgt 0,1 bis 0,5 mm und die Glättungshäufigkeit liegt bei 2 bis 3 Mal;
Schritt 2: Verwenden einer Slicing-Software, um das 3D-Modell des Gittermetalls mit variabler Dichte, das im Schritt 1 eingerichtet wurde, basierend auf den Eigenschaften einer diskontinuierlichen Abtastung kleiner Abschnitte in dem Gittermetallbildungsprozess, in Scheiben zu schneiden, Einstellen der Abtaststrategie und der Prozessparameter, und Verarbeiten eines Matrixmaterials in ein Gittermetall mit variabler Dichte unter dem Schutz eines Inertgases, wobei die Abtaststrategie eine kreisförmige Abtaststrategie ist, Zentrieren auf einen Durchmesser der Ebene der Porenverstrebung der Scheibe des Gittermetalls, und allmähliches Erweitern des Abtastens nach außen in der Form von konzentrischen Kreisen, wobei das Abtastintervall zwischen 30 und 110 µm liegt, und wobei die Abtastleistung zwischen 60 und 220 W liegt, wobei die Abtastgeschwindigkeit zwischen 100 und 2000 mm/s liegt und wobei die Schichtdicke zwischen 20 und 50 µm liegt; und
Schritt 3: Wärmebehandlung des Gittermetalls mit variabler Dichte, das im Schritt 2 erhalten wurde.

4. Herstellungsverfahren nach Anspruch 3, **dadurch gekennzeichnet, dass** das Matrixmaterial ein GH4169 Superlegierungspulver oder ein 304 Edelstahlpulver ist und dass die Partikelgröße des Pulvers zwischen 15 und 53 µm liegt.

5. Herstellungsverfahren nach Anspruch 3, **dadurch gekennzeichnet, dass** im Schritt 3, wenn das Matrixmaterial ein GH4169 Superlegierungspulver ist, der Wärmebehandlungsprozess wie folgt abläuft: erstens, eine Wärmeaufrechterhaltung bei 960°C für 1 Stunde und eine Wasserkühlung, danach eine Wärmeaufrechterhaltung bei 720°C für 8 Stunden und abschließend eine Offenkühlung auf 620°C mit einer Kühlrate von 50°C/h, Wärmeaufrechterhaltung für 8 Stunden und eine Luftkühlung; wenn das Matrixmaterial ein 304 Edelstahl ist, der Wärmebehandlungsprozess eine Lösungsbehandlung ist, wobei die Behandlungstemperatur zwischen 800 und 1100° C liegt und die Behandlungszeit zwischen 3 und 15 Stunden liegt.

6. Nutzung des Gittermetalls mit variabler Dichte, das schwingungsdämpfende Eigenschaften aufweist und das durch das Herstellungsverfahren nach Anspruch 3, vorbereitet wurde, in einer Komponente eines Schwingungsübertragungspfads, in einer Schwingungsdämpfungskomponente oder in einer Schwingungsisolierungskomponente eines Schiffs, einer Luftfahrtausrüstung und einer Schienentransportausrüstung.

## Revendications

1. Métal en forme de treillis de densité variable ayant des caractéristiques d'amortissement des vibrations, **caractérisé en ce que** chacune des cellules du métal en forme de treillis a une structure tétradécaédrique, une structure issue de la combinaison d'un dodécaèdre et d'un tétradécaèdre ou une structure octaédrique tronquée, et les cellules sont expansées pour former le métal en forme de treillis ;
dans lequel le métal en forme de treillis est basé sur une méthode d'énergie de déformation modale pour piloter la conception de diamètres d'entretoise entre pores, et la densité structurale globale présente une variation en gradient continu non homogène, dans lequel la méthode d'énergie de déformation modale est utilisée pour calculer une forme modale de la structure avec un logiciel d'éléments finis, une déformation modale est extraite et un diagramme en nuage de points d'énergie de déformation modale est construit, une variation en gradient continu des diamètres d'entretoise entre pores du métal en forme de treillis est pilotée par une fonction de champ d'énergie de déformation, et la valeur des diamètres d'entretoise entre pores du métal en forme de treillis dans une zone de forte énergie de déformation modale est plus grande que dans une zone de faible énergie de déformation, dans lequel la variation en gradient des diamètres d'entretoise entre pores du métal en forme de treillis de densité variable ne se fait pas dans une seule direction ;
dans lequel le métal en forme de treillis de densité variable est préparé par un procédé de fabrication additive par fusion sélective au laser ;
dans lequel la porosité du métal en forme de treillis est de 40 % à 90 %, les diamètres d'entretoise entre pores varient de façon continue dans la plage de 0,5 mm à 5 mm, la taille de palier de la variation en gradient continu des diamètres d'entretoise entre pores du métal en forme de treillis est de 0,08-0,2 mm, et la taille de cellule du métal en forme de treillis est de 5 à 10 mm.

2. Métal en forme de treillis de densité variable ayant des caractéristiques d'amortissement des vibrations selon la revendication 1, **caractérisé en ce que** les propriétés mécaniques en compression du métal en forme de treillis de densité variable présentent une courbe contrainte-déformation régulière et un plateau de déformation non élastique apparent, et la plage de contrainte du plateau de déformation non élastique est de 5-23 MPa.

3. Procédé de fabrication du métal en forme de treillis de densité variable ayant des caractéristiques d'amortissement des vibrations selon la revendication 1, **caractérisé en ce que** le procédé de fabrication comprend les étapes suivantes :
étape 1 : utilisation d'un logiciel de conception tridimensionnelle pour réaliser une conception d'adaptabilité aux processus de la structure poreuse du métal en forme de treillis de densité variable, lissage d'une position de variation du diamètre d'entretoise entre pores et d'une position de liaison de l'entretoise entre pores du métal en forme de treillis de densité variable, et établissement d'un modèle 3D du métal en forme de treillis de densité variable, les paramètres du traitement de lissage étant les suivants : le rayon de lissage est de 0,1-0,5 mm, et le nombre de lissages s'élève à 2-3 ;
étape 2 : utilisation d'un logiciel de découpage en tranches pour découper en tranches le modèle 3D du métal en forme de treillis de densité variable établi à l'étape 1, sur la base des caractéristiques d'un balayage discontinu de petite section dans le procédé de formation du métal en forme de treillis, établissement de la stratégie de balayage et des paramètres du procédé, et transformation d'un matériau matriciel en un métal en forme de treillis de densité variable sous la protection d'un gaz inerte, la stratégie de balayage étant une stratégie de balayage circulaire, centrage sur un diamètre du plan de l'entretoise entre pores de la tranche du métal en forme de treillis, et extension progressive du balayage vers l'extérieur sous la forme de cercles concentriques, l'intervalle de balayage étant de 30-110 µm, et la puissance de balayage étant de 60-220 W, la vitesse de balayage étant de 100-2000 mm/s, et l'épaisseur de couche étant de 20-50 µm ; et
étape 3 : traitement thermique du métal en forme de treillis de densité variable obtenu à l'étape 2.

4. Procédé de fabrication selon la revendication 3, **caractérisé en ce que** le matériau matriciel est de la poudre de superalliage GH4169 ou de la poudre d'acier inoxydable 304, et la taille de particule de la poudre est de 15-53 pm.

5. Procédé de fabrication selon la revendication 3, **caractérisé en ce que**, à l'étape 3, quand le matériau matriciel est de la poudre de superalliage GH4169, le traitement thermique est réalisé comme suit : tout d'abord, maintien de la température à 960 °C pendant 1 heure, et refroidissement à l'eau, puis maintien de la température à 720 °C pendant 8 heures, et enfin refroidissement du four à 620 °C à une vitesse de refroidissement de 50 °C/h, maintien de la température pendant 8 heures, et refroidissement à l'air ; quand le matériau matriciel est l'acier inoxydable 304, le traitement thermique est un traitement en solution, la température de traitement est de 800-1100 °C, et le temps de traitement est de 3-15 heures.

6. Utilisation du métal en forme de treillis de densité variable ayant des caractéristiques d'amortissement des vibrations préparé par le procédé de fabrication selon la revendication 3 dans un composant de transmission des vibrations, un composant d'amortissement des vibrations ou un composant d'isolement des vibrations d'un navire, d'un équipement aérospatial, et d'un équipement de transport ferroviaire.
